# EUROPÄISCHE PATENTSCHRIFT

(11) **EP 3 571 486 B1**
(45) Veröffentlichungstag und Bekanntmachung des Hinweises auf die Patenterteilung: **10.03.2021**
(21) Anmeldenummer: 18700679.6
(22) Anmeldetag: 17.01.2018
(51) Int. Cl.: G01M 3/32

(54) **FOLIENKAMMER MIT DOPPELFOLIE**
TEST CHAMBER WITH DOUBLE FOIL
CHAMBRE D'ESSAI AVEC DOUBLE FEUILLE

(30) Priorität: 23.01.2017 DE 102017201004
(43) Veröffentlichungstag der Anmeldung: 27.11.2019
(73) Patentinhaber: Inficon GmbH, 50968 Köln (DE)
(72) Erfinder: WETZIG, Daniel, 50999 Köln (DE)
(74) Vertreter: dompatent von Kreisler Selting Werner - Partnerschaft von Patent- und Rechtsanwälten mbB
(86) Internationale Anmeldenummer: PCT/EP2018/051116
(87) Internationale Veröffentlichungsnummer: WO 2018/134258

(56) Entgegenhaltungen:
- WO-A1-2015/140042
- DE-A1- 19 642 099
- DE-A1-102014 218 399

## Beschreibung

Die Erfindung betrifft eine Folienkammer zur Leckagedetektion eines gasgefüllten Prüflings, wie zum Beispiel einer Lebensmittelverpackung.

Derartige Folienkammern weisen ein von einer Folienkammerwand begrenztes Kammervolumen auf, in das der Prüfling zur Leckdetektion eingebracht wird. Die Folienkammer ist mit einem ersten Vakuumanschluss versehen, an den eine Vakuumpumpe zur Evakuierung des Kammervolumens angeschlossen ist. Mindestens ein Bereich der Folienkammerwand ist als flexible Folie ausgebildet, um sich beim Evakuieren an die äußere Form des Prüflings anschmiegen zu können.

Eine derartige Folienkammer wird beispielsweise bei dem Leckdetektionsgerät INFICON® Contura® S400 verwendet. Bei diesem Gerät wird die Druckanstiegsmethode zur Messung einer Leckagerate eines Prüflings, wie zum Beispiel einem Verpackungsbeutel, verwendet. Dabei wird die Folienkammer über den ersten Vakuumanschluss evakuiert, so dass in dem Prüfling enthaltenes Gas durch ein mögliches Leck in das Kammervolumen strömt. Dabei steigt der Druck innerhalb des Kammervolumens im Bereich außerhalb des Prüflings mit der Zeit an. Dieser Druckanstieg wird gemessen und dient als Hinweis auf ein mögliches Leck. Die Genauigkeit beziehungsweise die Nachweisgrenze der Druckanstiegsmethode hängt von dem Nettokammervolumen, das heißt von dem Kammervolumen im Bereich außerhalb des Prüflings (Kammervolumen abzüglich des Prüflingsvolumens), ab. Je kleiner dieses Kammervolumen ist, desto größer ist der Druckanstieg mit der Zeit bei einer gegebenen Leckrate.

Die Folienkammer des Leckdetektionsgeräts INFICON® Contura® S400 schmiegt sich bei Evakuierung an den Prüfling an, so dass das Nettokammervolumen besonders gering ist. Eine weitere Funktion der Folie besteht darin, dass von außerhalb der Folienkammer atmosphärischer Druck auf den Prüfling wirkt, so dass das Kammervolumen (das heißt der Raum zwischen den Folien und dem Prüfling) evakuiert werden kann, ohne dass der Prüfling platzt. Bei Erhöhen der Differenz zwischen dem Druck innerhalb des Prüflings und dem Druck innerhalb der Folienkammer im Bereich außerhalb des Prüflings steigt die Gasleckrate bei gegebenen Leckagen, was den Leckagenachweis verbessert.

Die kleinste nachweisbare Leckrate eines Prüflings ist bei einer Folienkammer, wie zum Beispiel derjenigen der Contura® S400, typischerweise begrenzt durch den Effekt eines Druckanstiegs innerhalb der Folienkammer, der bei dichtem Prüfling und auch bei leerer Folienkammer gemessen wird. Dieser Druckanstieg wird von Gasen verursacht, die aus der Folie der Folienkammer desorbieren oder durch die Folie diffundieren. Hierbei handelt es sich um Gase, die in der Folie gelöst sind und bei Vakuum aus der Folie herausgelöst werden oder durch die Folie hindurch permeieren.

Die Auswahl verwendbarer Folienmaterialien für eine Folienkammer ist durch diesen Effekt eingeschränkt. Zudem muss eine ausreichende Dicke der Folie gewählt werden, um eine ausreichende Diffusionsbarriere zu schaffen. Die Folie soll dabei aufgrund ihrer Dicke ausreichend verhindern, dass Gase durch die Folie hindurch diffundieren und so zu einem Druckanstieg innerhalb der evakuierten Folienkammer führen. Zudem muss das verwendete Folienmaterial eine geringe Löslichkeit für Gaskomponenten der Luft aufweisen, um die Ausgasung zu begrenzen. Daher kann die Folie einer Folienkammer nicht beliebig flexibel ausgebildet werden, um den Prüfling schonend und möglichst eng zu umschließen. Die Güte der Flexibilität der Folie nimmt nämlich mit steigender Dicke ab. Hochelastische Materialien, wie zum Beispiel Silikonfolien, die sich besonders gut und eng an einen Prüfling anschmiegen können, weisen eine hohe Permeabilität und Löslichkeit von Gasen auf und reduzieren die Nachweisgrenze für ein Leck erheblich. Bei herkömmlichen Folienkammern finden solche Folien daher keine Anwendung.

WO 2015/140042 offenbart eine evakuierbare flexible Leckage-Prüfkammer, bei der eine Folienkammerwand 2 einen Hohlraum umschließende Lagen aufweist.

DE 10 2014 218 399 A1 beschreibt eine Folienkammer mit flexiblen Wandbereichen, wobei an einen flexiblen Wandbereich ein Messvolumen angrenzt.

Der Erfindung liegt die Aufgabe zugrunde, eine verbesserte Folienkammer mit verbesserter Nachweisgrenze, insbesondere bei der Druckanstiegsmethode, zu schaffen.

Die erfindungsgemäße Folienkammer ist definiert durch die Merkmale von Anspruch 1.

Erfindungsgemäß weist eine Folie der Folienkammerwand mindestens zwei benachbart zu einander angeordnete Lagen auf, die zwischen sich einen evakuierbaren Folienzwischenraum begrenzen. Beim Evakuieren des Folienzwischenraums werden durch Desorption aus der Folie herausgelöste oder durch Diffusion durch die Folie hindurchtretende Gasanteile in den Folienzwischenraum gesaugt und gelangen nicht in das Kammervolumen. Diese Gasanteile beeinflussen somit nicht den Druckanstieg in dem Kammervolumen. Die beiden aufeinander gelegten Folienlagen sind zum Rand hin abgedichtet und mit einem Vakuumanschluss zum Evakuieren des Folienzwischenraums versehen. Der zwischen den Folienlagen gebildete dünne Folienzwischenraum wird während des Betriebs der Folienkammer zur Leckagedetektion eines Prüflings permanent evakuiert. Hierzu ist an den mit dem Folienzwischenraum verbundenen Gasanschluss (Vakuumanschluss) eine Vakuumpumpe angeschlossen. Die Permeationsrate von Gasanteilen, die in das Kammervolumen auch bei dichten Prüfling oder bei nicht in der Folienkammer enthaltenem Prüfling gelangen, wird dadurch um mehr als zwei Größenordnungen auf einen vernachlässigbaren Wert reduziert.

Vorzugsweise ist zwischen den beiden Folienlagen ein die beiden Lagen voneinander trennendes gasdurchlässiges Material, beispielsweise ein Vlies angeordnet. Das gasdurchlässige Material gestattet ein verbessertes Evakuieren des Folienzwischenraums auch bei eng aneinander liegenden Folienlagen.

Vorzugsweise weisen sämtliche Folien der Folienkammerwände jeweils zwei Lagen auf, zwischen denen jeweils ein evakuierbarer Folienzwischenraum gebildet ist. Im Randbereich der Folien sind die beiden Folienlagen von einem Rahmen gehalten und mit diesem gasdicht verbunden. Der beziehungsweise die Rahmen können den ersten und/oder den zweiten Vakuumanschluss aufweisen oder bilden.

Erfindungsgemäß wird auch ein entsprechendes Verfahren zur Leckagedetektion an einem in einer Folienkammer der oben beschriebenen Art enthaltenen Prüfling beansprucht. Dabei wird das Kammervolumen im Bereich außerhalb des Prüflings über den ersten Vakuumanschluss evakuiert. Zudem wird auch der Folienzwischenraum vorzugsweise über den zweiten Vakuumanschluss evakuiert. Die Leckagedetektion wird mit Hilfe der Druckanstiegsmethode vorgenommen, wobei der Druck innerhalb der Folienkammer im Bereich außerhalb des Prüflings über der Zeit gemessen wird. Ein Anstieg des Drucks dient dann als Hinweis auf ein Leck.

Zunächst wird das Kammervolumen auf einen Vakuumdruck gebracht und die Folienkammer anschließend bei Erreichen dieses Vakuumdruckes nicht weiter evakuiert. Nach Erreichen des vorgegebenen Vakuumdrucks wird der Druckanstieg über der Zeit gemessen. Während der Messung des Druckanstiegs erfolgt vorzugsweise permanent und kontinuierlich ein Evakuieren des Folienzwischenraums jeder aus zwei Lagen gebildeten Folie.

Im Folgenden wird anhand der Figuren ein Ausführungsbeispiel der Erfindung näher erläutert. Es zeigen:
- Fig. 1: einen Schnitt durch die Folienkammer in leerem Zustand und
- Fig. 2: den Schnitt nach Fig. 1 mit in der Folienkammer enthaltenem Prüfling.

Die Folienkammer 10 wird aus zwei flexiblen Folien 12, 14 gebildet, die in deren Randbereich jeweils in einem Rahmen 16, 18 gasdicht eingespannt sind. Die beiden Folien 12, 14 sind jeweils kreisrund und jeder Rahmen 16, 18 als Kreisring ausgebildet. Andere Formen sind denkbar.

Jede der beiden Folien 12, 14 besteht aus zwei Lagen 20, 22, zwischen denen jeweils eine Lage aus einem gasdurchlässigen Material 24 in Form eines Vlies angeordnet ist. Die obere Lage 20, das gasdurchlässige Material 24 und die untere Lage 22 jeder Folie 12, 14 sind parallel zueinander und eng aneinander anliegend angeordnet. Zwischen der oberen Folienlage 20 und der unteren Folienlage 22 jeder Folie 12, 14 ist ein evakuierbarer Folienzwischenraum 26 gebildet, in dem das gasdurchlässige Vliesmaterial 24 angeordnet ist.

Beide Lagen 20, 22 jeder Folie 12, 14 sind in demselben Rahmen 16 beziehungsweise 18 fest eingespannt.

Zwischen den beiden Rahmen 16, 18 ist ein erster Vakuumanschluss 28 zum anschließen einer das Kammervolumen 32 zwischen den benachbarten Folien 12, 14 evakuierenden ersten Vakuumpumpe 30 gebildet.

Jeder Rahmen 16, 18 weist darüber hinaus einen zweiten Vakuumanschluss 34 zum Anschließen einer zweiten Vakuumpumpe 36 auf, die den Folienzwischenraum 26 der betreffenden Folie 12, 14 evakuiert.

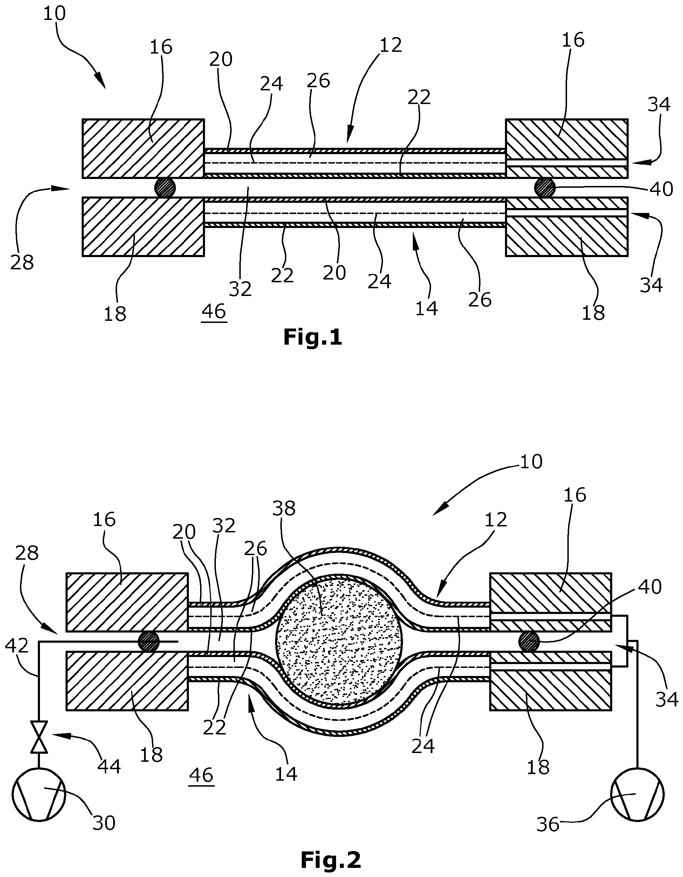

In Figur 2 ist in das Kammervolumen 32 ein Prüfling 38 in Form einer gasgefüllten Lebensmittelverpackung eingebracht. Die Folienkammer 10 ist gasdicht geschlossen. Zwischen den beiden Rahmen 16, 18 verhindert ein Dichtring 40 ein Eindringen von Gas in die evakuierte Folienkammer 10. Mit Hilfe der ersten Vakuumpumpe 30 wird über den ersten Vakuumanschluss 28 die Folienkammer 10 im Bereich außerhalb des Prüflings bis auf einen vorgegebenen Vakuumdruck evakuiert. Dabei schmiegen sich die beiden Folien 12, 14 flexibel an die äußere Form des Prüflings an und reduzieren so das Kammervolumen 32. Ein in dem die erste Vakuumpumpe 30 und den ersten Vakuumanschluss 28 verbindenden Gasleitungsweg 42 enthaltenes Ventil 44 wird geschlossen. Das Kammervolumen 32 ist hermetisch von der die Folienkammer außen umgebenden Atmosphäre 46 getrennt.

Mit einem in den Figuren nicht dargestellten Drucksensor wird der Druck innerhalb des Kammervolumens 32 über der Zeit gemessen und aufgezeichnet. Ein Anstieg dieses Drucks kann als Hinweis auf ein Leck des Prüflings 38 dienen, wenn ein geeignet gewählter Grenzwert für den Druckanstieg überschritten wird. Dieser Grenzwert kann dadurch geringer als bei den herkömmlichen Folienkammern angesetzt werden, dass während der Druckmessung der Druck in beiden Folienzwischenräumen 26 unterhalb eines geeignet gewählten Vakuumdruckgrenzwertes gehalten wird. Dies geschieht durch permanentes Evakuieren der beiden Folienzwischenräume 26 über die beiden zweiten Vakuumanschlüsse 34 mit Hilfe der zweiten Vakuumpumpe 36. Aus den Folienlagen 20, 22 und insbesondere aus den beiden inneren Folienlagen 22 austretendes Gas - sei es in Form von aus den Folienlagen desorbierendem Gas oder durch die Folienlagen hindurch diffundierendem Gas - wird aufgrund des Vakuumdrucks in den Folienzwischenräumen 26 in die Folienzwischenräume 26 gesogen und mit der zweiten Vakuumpumpe 36 evakuiert. Vorzugsweise ist der Vakuumdruck in beiden Folienzwischenräumen 26 zumindest während der Druckmessung geringer als der Druck innerhalb des Kammervolumens 32, so dass desorbierende oder diffundierende Gasanteile nicht in das Kammervolumen 32 gelangen, sondern in die Folienzwischenräume 26.

## Patentansprüche

1. Folienkammer (10), die zur Dichtheitsprüfung eines gasgefüllten Prüflings (38) eine Folienkammerwand aufweist, die ein Kammervolumen (32) zur Aufnahme des Prüflings (38) begrenzt und mit einem ersten Vakuumanschluss (28) zum Evakuieren des Kammervolumens (32) mit einer an den ersten Vakuumanschluss (28) angeschlossenen ersten Vakuumpumpe (30) versehen ist, wobei zumindest ein Teil der Folienkammerwand eine flexible Folie (12, 14) aufweist und wobei die Folie (12, 14) zwei benachbart zueinander angeordnete Lagen (20, 22) aufweist, die einen evakuierbaren Folienzwischenraum (26) umschließen,
**dadurch gekennzeichnet,**
**dass** ein zweiter Vakuumanschluss (34) vorgesehen ist, an den zum Evakuieren des Folienzwischenraums (26) eine zweite Vakuumpumpe (36) angeschlossen ist.

2. Folienkammer (10) nach Anspruch 1, **dadurch gekennzeichnet, dass** in dem Folienzwischenraum (26) ein gasdurchlässiges, die beiden Lagen (20, 22) von einander trennendes Material (24) angeordnet ist.

3. Folienkammer (10) nach Anspruch 2, **dadurch gekennzeichnet, dass** das gasdurchlässige Material (24) ein Vlies ist.

4. Folienkammer (10) nach einem der vorhergehenden Ansprüche, **dadurch gekennzeichnet, dass** die Folienkammer (10) zwei benachbarte Folien (12, 14) aufweist, zwischen denen das Kammervolumen (32) gebildet ist und die jeweils aus zwei benachbarten Lagen (20, 22) mit jeweils zwischen den beiden Lagen (20, 22) angeordneten Folienzwischenräumen (26) bestehen.

5. Folienkammer (10) nach Anspruch 4, **dadurch gekennzeichnet, dass** der äußere Randbereich jeder Folie (12, 14) von einem die Folie (12, 14) haltenden und dichtend mit der Folie (12, 14) verbundenen Rahmen (16, 18) versehen ist, wobei die beiden Rahmen (16, 18) den ersten und/oder zweiten Vakuumanschluss (28, 34) bilden oder aufweisen.

6. Verfahren zur Leckagedetektion an einem Prüfling (38) unter Verwendung einer Folienkammer (10) gemäß einem der Ansprüche 1 - 5, **gekennzeichnet durch** die Schritte
Einbringen des Prüflings (38) in das Kammervolumen (32),
Schließen des Kammervolumens (32),
Evakuieren des Kammervolumens (32) bis auf einen vorgegebenen Vakuumdruck unterhalb atmosphärischen Drucks,
Messen des Drucks innerhalb der Folienkammer (10) im Bereich außerhalb des Prüflings (38) über der Zeit,
Erfassen eines Anstiegs des gemessenen Drucks und
Evakuieren mindestens eines und vorzugsweise jedes Folienzwischenraums (26) während der Leckagedetektion.

7. Verfahren nach Anspruch 6, **dadurch gekennzeichnet, dass** der Folienzwischenraum (26) während der Druckmessung permanent unterhalb eines Grenzvakuumdrucks gehalten wird.

## Claims

1. A film chamber (10) comprising a film chamber wall provided for a tightness test on a gas-filled test specimen (38), said film chamber wall defining a chamber volume (32) for accommodating said test specimen (38) and being provided with a first vacuum connection (28) for evacuating said chamber volume (32) by means of a first vacuum pump (30) connected to said first vacuum connection (28), wherein at least a portion of the film chamber wall comprises a flexible film (12, 14) and wherein said film (12, 14) comprises two layers (20, 22) arranged adjacent to each other and surrounding an evacuable film interspace (26),
**characterized in**
**that** a second vacuum connection (34) is provided to which a second vacuum pump (36) is connected for evacuating the film interspace (26).

2. The film chamber (10) according to claim 1, **characterized in that** in the film interspace (26) a gas-permeable material (24) separating the two layers (20, 22) from each other is arranged.

3. The film chamber (10) according to claim 2, **characterized in that** the gas-permeable material (24) is a nonwoven fabric.

4. The film chamber (10) according to any one of the preceding claims, **characterized in that** the film chamber (10) comprises two adjacent films (12, 14) between which the chamber volume (32) is defined and which are respectively made up of two adjacent layers (20, 22) having respective film interspaces (26) arranged between said two layers (20, 22).

5. The film chamber (10) according to claim 4, **characterized in that** the outer edge area of each film (12, 14) is provided with a frame (16, 18) holding said film (12, 14) and being sealingly connected with said film (12, 14), wherein said two frames (16, 18) constitute or comprise the first and/or the second vacuum connection (28, 34).

6. A method for leakage detection on a test specimen (38) using a film chamber (10) according to any one of claims 1-5,
**characterized by** the following steps
introducing said test specimen (38) into the chamber volume (32),
closing said chamber volume (32),
evacuating said chamber volume (32) down to a predetermined vacuum pressure below atmospheric pressure,
measuring over time the pressure inside said film chamber (10) in the area outside said test specimen (38),
capturing an increase of the measured pressure, and
evacuating at least one, and preferably each film interspace (26) during leak detection.

7. The method according to claim 6, **characterized in that** the film interspace (26) is permanently kept below a limit vacuum pressure during the pressure measurement.

## Revendications

1. Chambre en feuille (10), laquelle comporte une paroi de chambre en feuille pour contrôler l'étanchéité d'un échantillon rempli de gaz (38), délimitant un volume de chambre (32) destiné à accueillir l'échantillon (38) et étant prévue avec un premier raccord au vide (28) pour évacuer le volume de chambre (32) avec une première pompe à vide (30) raccordée au premier raccord au vide (28), dans laquelle au moins une partie de la paroi de chambre en feuille comporte une feuille flexible (12, 14) et dans laquelle la feuille (12, 14) comporte deux couches (20, 22) disposées de manière mutuellement adjacente, lesquelles entourent un interstice de feuille (26),
**caractérisée en ce que**
un deuxième raccord au vide (34) est prévu, auquel est raccordée une deuxième pompe à vide (36) pour évacuer l'interstice de feuille (26).

2. Chambre en feuille (10) selon la revendication 1,
**caractérisée en ce qu'**un matériau (24) poreux au gaz et séparant l'une de l'autre les deux couches (20, 22) est disposé dans l'interstice de feuille (26).

3. Chambre en feuille (10) selon la revendication 2,
**caractérisée en ce que** le matériau poreux au gaz (24) est un matériau non-tissé.

4. Chambre en feuille (10) selon l'une des revendications précédentes, **caractérisée en ce que** la chambre en feuille (10) comporte deux feuilles adjacentes (12, 14), entre lesquelles est formé le volume de chambre (32) et lesquelles sont constituées de deux couches adjacentes (20, 22) dotées respectivement d'interstices de feuille (26) disposés entre les deux couches (20, 22).

5. Chambre en feuille (10) selon la revendication 4,
**caractérisée en ce que** la zone de bord extérieur de chaque feuille (12, 14) est prévue avec un cadre (16, 18) maintenant la feuille (12, 14) et relié de manière étanche à la feuille (12, 14), dans laquelle les deux cadres (16, 18) forment ou comportent le premier et/ou le deuxième raccord au vide (28, 34).

6. Procédé de détection des fuites sur un échantillon (38) en utilisant une chambre en feuille (10) selon l'une des revendications 1-5, **caractérisé par** les étapes
introduction de l'échantillon (38) dans le volume de chambre (32),
fermeture du volume de chambre (32),
évacuation du volume de chambre (32) jusqu'à une dépression prédéfinie en dessous de la pression atmosphérique,
mesure de la pression à l'intérieur de la chambre en feuille (10) dans la zone à l'extérieur de l'échantillon (38) au cours du temps,
saisie d'une augmentation de la pression mesurée et
évacuation d'au moins un et de préférence de chaque interstice de feuille (26) pendant la détection de fuite.

7. Procédé selon la revendication 6, **caractérisé en ce que** l'interstice de feuille (26) est maintenu en permanence en dessous d'une dépression limite pendant la mesure de pression.
